(19) Europäisches Patentamt
European Patent Office
Office européen des brevets

(11) EP 4 198 491 A1

(12) **EUROPÄISCHE PATENTANMELDUNG**

(43) Veröffentlichungstag:
21.06.2023 Patentblatt 2023/25

(21) Anmeldenummer: 21214613.8

(22) Anmeldetag: 15.12.2021

(51) Internationale Patentklassifikation (IPC):
*G01N 15/02* (2006.01)

(52) Gemeinsame Patentklassifikation (CPC):
G01N 15/02; G01N 15/08

(84) Benannte Vertragsstaaten:
AL AT BE BG CH CY CZ DE DK EE ES FI FR GB GR HR HU IE IS IT LI LT LU LV MC MK MT NL NO PL PT RO RS SE SI SK SM TR
Benannte Erstreckungsstaaten:
BA ME
Benannte Validierungsstaaten:
KH MA MD TN

(71) Anmelder: H.C. Starck Tungsten GmbH
80335 München (DE)

(72) Erfinder:
• SÄUBERLICH, Tino
38667 Bad Harzburg (DE)

• ZEUGNER, Alexander
38302 Wolfenbüttel (DE)
• MEESE-MARKTSCHEFFEL, Juliane
38642 Goslar (DE)

(74) Vertreter: dompatent von Kreisler Selting Werner - Partnerschaft von Patent- und Rechtsanwälten mbB
Deichmannhaus am Dom
Bahnhofsvorplatz 1
50667 Köln (DE)

(54) **VERFAHREN UND APPARATUR ZUR BESTIMMUNG DES ÄQUIVALENTDURCHMESSERS VON PULVERPARTIKELN**

(57) Die vorliegende Erfindung betrifft ein Verfahren zur Bestimmung des Äquivalentdurchmessers von Partikeln eines Pulvers sowie eine Apparatur zur Durchführung dieses Verfahrens. Insbesondere umfasst das Verfahren die folgenden Schritte:

i) Bereitstellen einer Pulverprobe in Form eines Pulverpresslings;
ii) Bestimmen der Porosität des Pulverpresslings auf Basis der Masse und der Höhe des Pulverpresslings;
iii) Ermitteln des Verhältnisses von $\Delta p$ und Q durch Durchströmen des Pulverpresslings mit einem Messfluid durch Variation von $\Delta p$ oder Q über die Zeit unter Erhalt einer Kennlinie, wobei $\Delta p$ die in Strömungsrichtung auftretende Differenz zwischen dem Druck $p_{vor}$ vor dem Pulverpressling und dem Druck $p_{nach}$ nach dem Pulverpressling angibt; wobei Q den Volumenstrom des Messfluids bezeichnet; und

iv) Ermitteln des Äquivalentdurchmessers D durch Ableitung aus der Kennlinie unter Berücksichtigung der in ii) ermittelten Porosität des Pulverpresslings.

Figur 2

EP 4 198 491 A1

**Beschreibung**

Die vorliegende Erfindung betrifft ein Verfahren zur Bestimmung des Äquivalentdurchmessers von Partikeln eines Pulvers sowie eine Apparatur zur Durchführung dieses Verfahrens.

Die Korngröße beschreibt die Größe einzelner Partikel in einem Gemenge und ist ein wesentlicher Parameter zur Charakterisierung von anorganischen Pulvern, wie sie beispielsweise in der Metallurgie oder Zementindustrie eingesetzt werden. Hier dient die Korngröße als materialspezifische Kenngröße, mit der verschiedene Pulverqualitäten einfach, präzise und reproduzierbar unterschieden werden können.

Bei der Bestimmung der Korngröße wird in der Regel auf den Äquivalentdurchmesser abgestellt, der der Tatsache Rechnung trägt, dass die Körner nicht in Form von perfekten Kugeln vorliegen. Der Äquivalentdurchmesser lässt sich anhand des Siebdurchmesser veranschaulichen. Durch ein quadratisches Loch eines Siebes mit einer Kantenlänge von beispielsweise 1 mm passt sowohl eine Kugel mit einem Durchmesser von 1 mm als auch ein längliches Korn mit einem Durchmesser von 1 mm. Über die Diagonale des Lochs gesehen würde auch beispielsweise ein abgerundetes, flaches Korn mit einem Durchmesser von mehr als 1 mm durchpassen. Obwohl sich die Körner hinsichtlich ihrer Form unterscheiden, werden alle mit einem Äquivalentdurchmesser von 1 mm angegeben. Im Allgemeinen der Äquivalentdurchmesser auf den Durchmesser volumengleicher Kugeln bezogen. Insbesondere bei Materialien mit konstanter Dichte und annähernd sphärischer Form können die Eigenschaften von theoretisch herleitbaren Kugelpackungen, bei denen alle Kugeln gleich groß sind, herangezogen werden. Wird dann eine Eigenschaft eines realen Systems gemessen, beispielsweise die strömungsmechanischen Eigenschaften, können die erhaltenen Werte entsprechend berechneten Werten für das theoretische System zugeordnet werden.

Nach heutigem Stand stehen eine Reihe von Verfahren zur Verfügung, mit denen sich der Äquivalentdurchmesser als Maß für die Korngröße von festen, nicht porösen Partikeln bestimmen lässt. Neben der Laserbeugung sind beispielsweise Siebanalysen, Sedimentationsanalysen oder die Bestimmung der spezifischen Oberfläche nach dem BET-Verfahren bekannt. Vor allem im Bereich der Hartmetallindustrie ist die FSSS-Methode (Fisher Sub Sieve Sizer) seit Jahrzehnten weit verbreitet und stellt das Fundament für die Einordnung und den Vergleich verschiedener Hartstoffe und Metallpulver wie zum Beispiel Wolframcarbid dar, wobei eine wichtige Voraussetzung für die Anwendung derartiger Verfahren eine relativ enge monomodale Partikelgrößenverteilung ist.

Die im industriellen Maßstab weit verbreitete FSSS-Methode stammt aus den 1940er Jahren und basiert auf der Gaspermeabilität von gepressten Pulverproben. Mit dieser Methode kann eine mittlere Korngröße, die dem Äquivalentdurchmesser einer volumengleichen Kugel entspricht, bestimmt werden. Die Messmethode und die entsprechenden kommerziell erhältlichen Geräte sind in der Norm ASTM B330 - *Standard Test Methods for Estimating Average Particle Size of Metal Powders and Related Compounds Using Air Permeability* - ausführlich beschrieben. Zur Bestimmung des Äquivalentdurchmessers wird ein Gasstrom durch einen definierten Pulverpressling geleitet und die Druckdifferenz gemessen. Mit Hilfe der Carman-Kozeny-Gleichung (1) kann dann der Äquivalentdurchmesser (D) aus dem Verhältnis von Druckverlust und Gasströmung abgeleitet werden.

$$\frac{\Delta p}{L} = \frac{180\,\mu}{\phi^2 D^2}\,\frac{(1-\varepsilon)^2}{\varepsilon^3}\,\nu$$

$$(1),$$

mit $\Delta p$: Druckdifferenz [Pa]; L: durchströmte Länge des Probenkörpers [m]; $\mu$: dynamische Viskosität des Messgases [Pa*s]; $\Phi$: Formfaktor (in der Regel auf 1 gesetzt); $\varepsilon$: Porosität [-], $\nu$: Strömungsgeschwindigkeit [m/s], D: Äquivaltendurchmesser der volumengleichen Kugel [m] .

Aus den folgenden Gleichungen (2) bis (4), wobei m die Masse der Probe [kg]; $\rho$ die physikalische Dichte des zu messenden Materiales [kg/m$^3$]; A die Querschnittsfläche senkrecht zur Strömungsrichtung [m$^2$] und f der Volumenstrom [m$^3$/s] ist,

$$\nu = \frac{f}{A} \qquad K = \frac{180\mu}{\phi^2}\,\frac{(1-\varepsilon)^2}{\varepsilon^3} \qquad \varepsilon = 1 - \frac{m}{\rho L A}$$

$$(2),\ (3),\ (4)$$

ergibt sich der Zusammenhang

$$D = \sqrt{\frac{KL}{A} \frac{f}{\Delta p}}$$

$$(5)$$

zur Berechnung des Äquivalentdurchmessers.

Die auf dem Gebiet der Hartmetallindustrie etablierten Messsysteme nach dem FSSS-Verfahren weisen einige Nachteile auf. So ist ein Parameter, der zur Bestimmung des Äquivalentdurchmessers herangezogen wird, die Porosität der Probe, die in der Regel anhand der Höhe eines verpressten, zylindrischen Probenkörpers unter Verwendung eines Nomogramms am Messgerät mittels Augenmaß mit der entsprechenden Ungenauigkeit erfolgt, wodurch sich zufällige Fehler ergeben, die zu einer breiten Messstreuung beitragen. Als weiterer Nachteil sieht die Messmethode des FSSS-Verfahrens nur eine Ein-Punkt-Messung vor, wodurch sich weitere Fehler ergeben können. Darüber hinaus wird in der aktuellen Ausgabe der einschlägigen Norm ASTM B330 darauf hingewiesen, dass das FSSS-Verfahren in Zukunft kein normgerechtes Verfahren mehr sein wird, wobei als Grund die fehlende Verfügbarkeit von Geräten und Ersatzteilen sowie der fehlende technische Support angegeben wird.

Vor diesem Hintergrund sieht die vorliegende Erfindung ihre Aufgabe in der Bereitstellung eines Messverfahrens sowie einer entsprechenden Apparatur zur Bestimmung des Äquivalentdurchmessers von Pulverpartikeln. Durch das zur Verfügung gestellte Verfahren soll eine verbesserte Präzision der Messwerte und eine Reduktion der Messstreuung erreicht werden.

Es wurde überraschend gefunden, dass diese Aufgabe dadurch gelöst werden kann, dass der Äquivalentdurchmesser von Pulverpartikeln mittels Mehrpunktmessung bestimmt wird, wodurch überraschenderweise eine präzisere und mit einer geringeren Messstreuung verbundene Messung erhalten wird.

Daher ist ein erster Gegenstand der vorliegenden Erfindung ein Verfahren zur Bestimmung des Äquivalentdurchmessers D von Pulverpartikeln, wobei der Äquivalentdurchmesser mittels Mehrpunktmessung bestimmt wird.

Die Bestimmung der Korngröße auf Basis des Äquivalentdurchmesser beruht darauf, dass eine Pulverprobe mit einem Messfluid, in der Regel ein Gas, durchströmt wird und der Äquivalentdurchmesser dann auf Basis des Druckunterschieds vor und nach der Probe mit Hilfe der oben aufgeführten Gleichungen ermittelt wird. Das herkömmliche FSSS-Verfahren weist den Nachteil auf, dass es mit einem konstanten Volumenstrom operiert, wodurch sich einige Nachteile ergeben: Um verlässliche Werte zu erhalten, müsste eigentlich abgewartet werden, bis sich das freie Volumen im Messgerät und in der Probe mit dem Messfluid gefüllt hat, also der eingehende Volumenstrom dem ausgehenden Volumenstrom entspricht und sich das System in einem stationären Zustand befindet. Dies kann je nach Korngröße mehrere Minuten dauern. Wird dieser Zustand nicht abgewartet, führt dies aufgrund des Nullpunktbezugs der durchgeführten Ein-Punkt-Messung zu einer fehlerhaften Auswertung. Wird dem System bei jeder Messung genug Zeit eingeräumt, bis sich der stationäre Zustand eingestellt hat, verlängert sich die Messdauer unverhältnismäßig, insbesondere, wenn mehrere Messungen durchgeführt werden sollen. Vor diesem Hintergrund muss beim herkömmlichen FSSS-Verfahren also ein Kompromiss zwischen der Präzision der Messwerte und der Messdauer eingegangen werden, der durch das erfindungsgemäße Verfahren entfällt.

Im Rahmen des erfindungsgemäßen Verfahrens hat sich überraschend gezeigt, dass die bei den herkömmlichen Verfahren auftretenden Messungenauigkeiten dadurch überwunden werden können, dass der Äquivalentdurchmesser aus dem Zusammenhang der Druckdifferenz eines Messfluids bei Durchströmen einer definierten Pulverprobe durch Mehrpunktbestimmung bestimmt wird.

Entsprechend sieht das erfindungsgemäße Verfahren eine Mehrpunktbestimmung vor, die im Gegensatz zu der üblicherweise angewandten Ein-Punkt-Bestimmung bei der Auswertung keinen Bezug zum Nullpunkt erfordert, wodurch sich eine falsche Steigung der Messgeraden ergibt. Im Gegensatz dazu ermöglicht es die erfindungsgemäß vorgesehene Mehrpunktmessung die ersten Messwerte zu vernachlässigen und so Messfehler, die durch eine zu kurze Messdauer hervorgerufen werden, zu vermeiden. Erfindungsgemäß wird die Mehrpunktmessung vorzugsweise dadurch erreicht, dass kein konstanter Volumenstrom des Messfluids eingestellt wird, sondern der Volumenstrom Q oder die Druckdifferenz $\Delta p$ als Funktion der Zeit t variiert werden. Diese Variation kann erfindungsgemäß schrittweise in kleinen Intervallen oder auch kontinuierlich erfolgen. Dem Messverfahren liegt demnach kein konstanter Volumenstrom, sondern eine bestimmte Volumenstromänderungsrate zugrunde. Äquivalentes gilt für eine Variation des Druckes. Auf diese Weise konnte sowohl die Präzision der Messwerte deutlich erhöht werden als auch die Messdauer gegenüber herkömmlichen Messverfahren vorteilhaft verkürzt werden.

Darauf aufbauend umfasst das erfindungsgemäße Verfahren in einer bevorzugten Ausführungsform die folgenden Schritte:

i) Bereitstellen einer Pulverprobe in Form eines Pulverpresslings;

ii) Bestimmen der Porosität des Pulverpresslings auf Basis der Masse und der Höhe des Pulverpresslings;

iii) Ermitteln des Verhältnisses von $\Delta p$ und Q beim Durchströmen des Pulverpresslings mit einem Messfluid durch Variation von $\Delta p$ oder Q über die Zeit unter Erhalt einer Kennlinie,
wobei $\Delta p$ die in Strömungsrichtung auftretende Differenz zwischen dem Druck $p_{vor}$ vor dem Pulverpressling und dem Druck $p_{nach}$ nach dem Pulverpressling angibt;
wobei Q den Volumenstrom des Messfluids bezeichnet; und

iv) Ermitteln des Äquivalentdurchmessers D durch Ableitung aus der Kennlinie unter Berücksichtigung der in ii) ermittelten Porosität des Pulverpresslings.

Die Druckdifferenz $\Delta p$ kann durch Messen des Drucks $p_{vor}$ des Messfluids vor Durchströmen des Probenkörpers und des Drucks des Messfluids $p_{nach}$ nach Durchströmen des Probenkörpers bestimmt werden.

Bei dem Messfluid kann es sich sowohl um ein Gas als auch um eine Flüssigkeit handeln. Vorzugsweise wird als Messfluid ein Gas eingesetzt, besonders bevorzugt eines, das aus der Gruppe ausgewählt ist, die aus trockene Luft, Stickstoff, Argon, Helium, Kohlenstoffdioxid besteht. Das Messfluid kann dabei in Abhängigkeit der erwarteten Korngröße gewählt werden, wobei es sich als vorteilhaft erwiesen hat für gröbere Korngrößen höherviskose Messfluide zu verwenden.

Im Rahmen des erfindungsgemäßen Verfahrens wird eine verbesserte Präzision der Messwerte bei gleichzeitig verkürzter Messdauer durch Durchführung einer Mehrpunktmessung erreicht, die sich dadurch auszeichnet, dass ihre Auswertung ohne Nullpunktbezug erfolgt. Daher ist eine Ausführungsform des erfindungsgemäßen Verfahrens bevorzugt, in der in Schritt iii) mindestens zwei unterschiedliche Messpunkte ermittelt werden, die nicht dem Nullpunkt ($\Delta p= 0$; bzw. Q = 0) der Kennlinie entsprechen.

Die für die Aufnahme der Kennlinie des Zusammenhangs zwischen $\Delta p$ und Q erforderlichen Messwerte können durch Variation eines der beiden Parameter über die Zeit t erhalten werden. In einer bevorzugten Ausführungsform wird die Kennlinie des Zusammenhangs zwischen $\Delta p$ und Q durch Variation des Volumenstroms Q(t) ermittelt. In einer alternativ bevorzugten Ausführungsform wird die Kennlinie des Zusammenhangs zwischen $\Delta p$ und Q als zeitlicher Verlauf Druckes $p_{vor}(t)$ ermittelt.

In einer besonders bevorzugten Ausführungsform wird die Kennlinie des Zusammenhangs zwischen $\Delta p$ und Q als zeitlicher Verlauf des Drucks $p_{vor}(t)$ vor dem Pulverpressling bei einem definierten Volumenstrom Q(t), der ebenfalls eine Funktion der Zeit ist, erhalten, wobei der Volumenstrom in definierten Zeitabschnitten um einen konstanten Betrag erhöht wird. In einer weiteren bevorzugten Ausführungsform wird die Kennlinie des Zusammenhangs zwischen $\Delta p$ und Q als zeitlicher Verlauf des Drucks $p_{vor}(t)$ vor dem Pulverpressling bei kontinuierlich steigendem Volumenstrom Q(t) erhalten. Es hat sich überraschend gezeigt, dass in beiden Fällen eine besonders enge Verteilung der Messwerte erzielt werden kann.

Im Rahmen der vorliegenden Erfindung hat sich überraschend gezeigt, dass im Vergleich herkömmlichen Messmethoden, bei denen entweder ein konstanter Druck oder ein konstanter Volumenstrom eingestellt wird, durch das definierte Verändern einer diesen beiden Größen eine Verbesserung der Präzision der Messwerte erreicht wird. Ohne an eine bestimmte Theorie gebunden zu sein, wird davon ausgegangen, dass die verbesserte Präzision dadurch erreicht wird, dass auftretende Messfehler mehrfach mitgemessen und dann eliminiert werden können. Dies erfolgt in einer bevorzugten Ausführungsform der Erfindung durch lineare Regression, bei der eine Geradengleichung erhalten wird, die beispielsweise über die Parameter Achsenabschnitt und Steigung definiert wird. Auf diese Weise wird erreicht, dass die relevanten Informationen zur Ermittlung des Äquivalentdurchmessers durch die Steigung der Geraden repräsentiert werden. Der Achsenabschnitt entspricht dann dem Messfehler und kann bei der weiteren Auswertung außenvorgelassen werden.

Als weiterer Parameter, der erfindungsgemäß in die Bestimmung des Äquivalentdurchmessers einfließt, ist die Porosität des Pulverpresslings zu nennen.

Zur Vermessung der Probe kann ein geometrisch definierter Pulverpressling hergestellt werden. Die Fom wird dabei vorteilhafterweise so gewählt, dass eine über die Höhe konstante Querschnittsfläche erzeugt wird, die sich senkrecht zur Höhe des Pulverpresslings verhält. Vorteilhaft wird diese Anforderung von einem Quader oder einem Zylinder erfüllt, wobei zylinderförmigen Geometrien Präferenz eingeräumt wird. Entsprechend ist eine Ausführungsform bevorzugt, bei der die Bestimmung der Porosität des Pulverpresslings in Schritt ii) des erfindungsgemäßen Verfahren an einem zylinderförmigen Pulverpressling erfolgt. Die Porosität des Pulverpresslings kann so, wie dem Fachmann bekannt ist, aus dessen Masse, Querschnitt und Höhe bestimmt werden, wobei als die Höhe die Ausdehnung des Pulverpresslings in Strömungsrichtung des Messfluids zu sehen ist. Um eine bessere Handhabung des Pulverpresslings zu erreichen, wird dieser vorzugsweise in einem Probenröhrchen bereitgestellt.

Im Rahmen des erfindungsgemäßen Verfahrens hat sich herausgestellt, dass es insbesondere aufgrund ungenauer Bestimmungen der Höhe des Pulverpresslings zu Messungenauigkeiten kommt. Um diese Fehlerquelle zu minimieren, hat es sich als vorteilhaft herausgestellt, wenn die zu vermessende Probe jeweils mit einer definierten Kraft verpresst wird. Daher ist eine Ausführungsform des erfindungsgemäßen Verfahrens bevorzugt, in der der Pulverpressling durch Verpressen der zu vermessenden Probe mit einer definierten Kraft erhalten wird. Vorzugsweise wird beim Verpressen ein mechanischer Druck von 0.5 bis 3 MPa, vorzugsweise 1 bis 2 MPa aufgebracht.

Um eine einheitliche Probenherstellung und ein genaues Vermessen der Höhe des erhaltenen Pulverpresslings zu erreichen, hat es sich als vorteilhaft erwiesen, wenn die Probenpräparation und die Vermessung zumindest teilweise automatierst sind. Daher ist eine Ausführungsform bevorzugt, in der das Verpressen der Pulverprobe zur Herstellung des Pulverpresslings automatisiert erfolgt. Auf diese Weise kann eine einheitliche und reproduzierbare Porositätsbestimmung erreicht werden.

Eine weitere Schwierigkeit bei der Bestimmung des Äquivalentdurchmessers ist die eingeschränkte Bereitstellung geeigneter Geräte. Ein weiterer Gegenstand der vorliegenden Erfindung ist daher eine Apparatur zur Durchführung des erfindungsgemäßen Verfahrens. Die Apparatur weist eine Aufnahmevorrichtung zur Aufnahme eines Proberöhrchens mit einem Pulverpressling, eine Datenaufnahmevorrichtung zur Aufnahme der Daten $p_{vor}$ und $p_{nach}$, oder $\Delta p$, und Q, eine Datenauswerteeinheit, eine Datenausgabevorrichtung, mindestens einen Druckregulator, eine Einlassvorrichtung und eine Auslassvorrichtung für ein Messfluid und mindestens einen Regulator zum Regeln des Volumenstroms des Messfluids auf.

Die erfindungsgemäße Apparatur wird vorzugsweise derart betrieben, dass ein Messfluid durch die Einlassvorrichtung in die Apparatur eingeleitet wird und den Pulverpressling durchströmt, bevor es durch die Auslassvorrichtung die Apparatur wieder verlässt.

Um eine einheitliche Probenbereitstellung zu gewährleisten weist die erfindungsgemäße Apparatur in einer bevorzugten Ausführungsform weiterhin eine automatische Pressvorrichtung zur Herstellung des Pulverpresslings auf.

Um eine feinere Einstellung von Druck und Volumenstrom zu erreichen, weist die erfindungsgemäße Apparatur vorzugsweise verschiedene Regulatoren für den Druck und/oder den Volumenstrom des Messfluids auf.

In einer bevorzugten Ausführungsform verfügt die erfindungsgemäße Apparatur weiterhin über mehrere, parallel geschaltete Messplätze und eine zentrale Steuerund Auswerteeinheit zur Verwaltung der Messplätze. Auf diese Weise kann die Effizienz des Messgerätes erhöht werden. Das gleichzeitige Messen von Proben in parallelen Messplätzen ermöglicht darüber hinaus den ökonomischen Einsatz von Messpersonal. Je nach Anforderungen an die zu messenden Pulver kann der Messbereich der geschalteten Messplätze variiert werden. Vorzugsweise deckt die erfindungsgemäße Apparatur einen Bereich der Korngröße von 0.2 bis 200 $\mu$m ab. Dieser Bereich ist deutlich größer als der, der durch das herkömmliche FSSS-Verfahren abgedeckt wird, so dass hierin ein weiterer Vorteil der vorliegenden Erfindung zu sehen ist. Durch die erfindungsgemäße Variation des Volumenstroms als Funktion der Zeit ist es weiterhin möglich ausreichend hohe Gasmengen zur Verfügung zu stellen, um auch Pulver, die aufgrund ihrer groben Partikel nur einen kleinen Druckverlust besitzen, zu vermessen.

Die Vorteile der vorliegenden Erfindung werden anhand der folgenden Figuren verdeutlicht, wobei diese jedoch nicht als Einschränkung des Erfindungsgedanken zu verstehen sind.

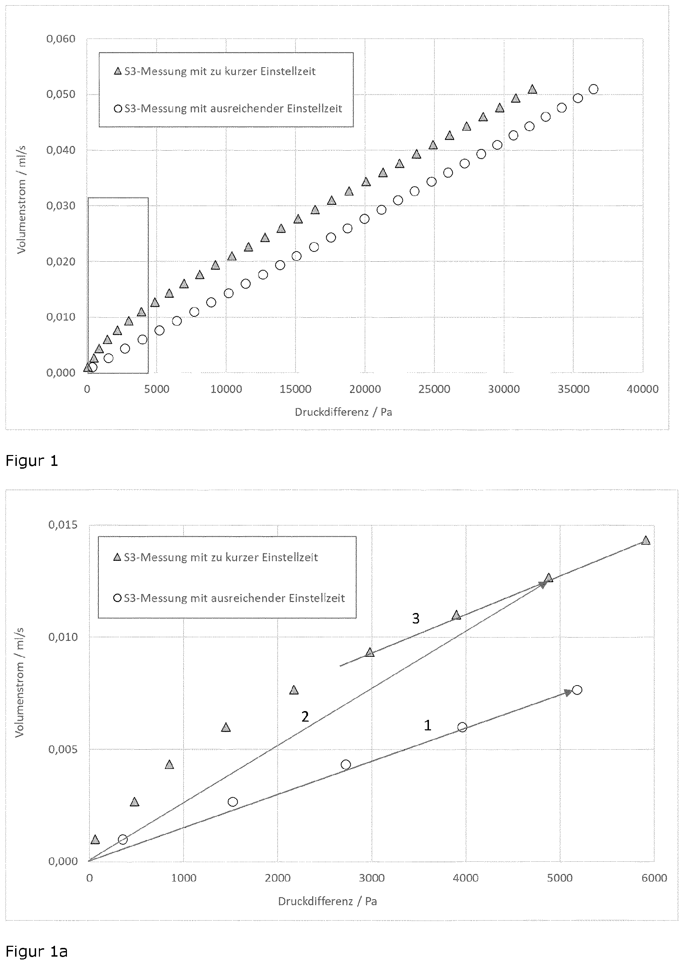

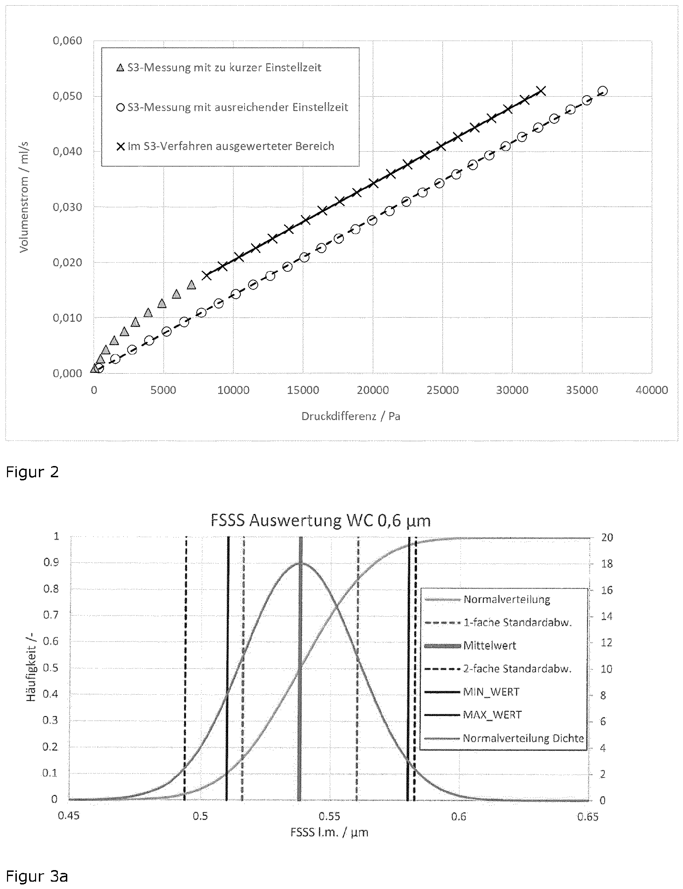

Die Figuren 1 und 2 zeigen den Einfluss der Einstellzeit, also der Zeit, die es braucht, bis das System in einem stationären Zustand ist, anhand der Vermessung eines WC Pulvers mit einer Korngröße von 0,8 $\mu$m. Die Einstellzeit wurde auf 8 Minuten ermittelt, wodurch sich eine Messzeit bei einer Ein-Punkt-Messung mit 10 Messwerten von 80 Minuten ergibt. Der Einfluss einer zu kurzen Einstellzeit auf die Messung ist deutlich in den Nullpunktabweichungen zu erkennen. Figur 1 zeigt die Fehler, die sich durch eine nicht ausreichende Einstellzeit bei einer herkömmlichen Ein-Punkt-Messung ergeben. Figur 1a zeigt den in Figur 1 gekennzeichneten Ausschnitt und entsprechende Messwerte einer Ein-Punkt-Messung, die einem Messbereich des klassischen FSSS-Verfahrens entspricht. Wie aus der Figur ersichtlich, führt die klassische Ein-Punkt-Messung auch bei ausreichender Einstellzeit zu deutlich abweichenden Ergebnissen (Graph 1 und 2). Im Gegensatz dazu erlaubt das erfindungsgemäße Verfahren durch die Mehrpunktmessung auch bei einer verkürzten Messzeit eine deutlich präzisere Messung (Graph 3). Bei dieser Art der Messung wurde ein relativer Fehler von 7% ermittelt. Bei den Messpunkten der Ein-Punkt-Messung wurde eine Abweichung von 35% beobachtet.

Figur 2 zeigt die Kennlinie einer erfindungsgemäßen Mehrpunktmessung. Durch geeignete Wahl des Abschnitts der Kennlinie zur Ermittlung des Äquivalentdurchmessers konnte der relative Fehler auf 1,5% reduziert werden. Weiterhin konnte die Messzeit durch die erfindungsgemäße Aufstellung der p(t)-Kurve durch Mehrpunktmessung auf 8 Minuten verkürzt werden.

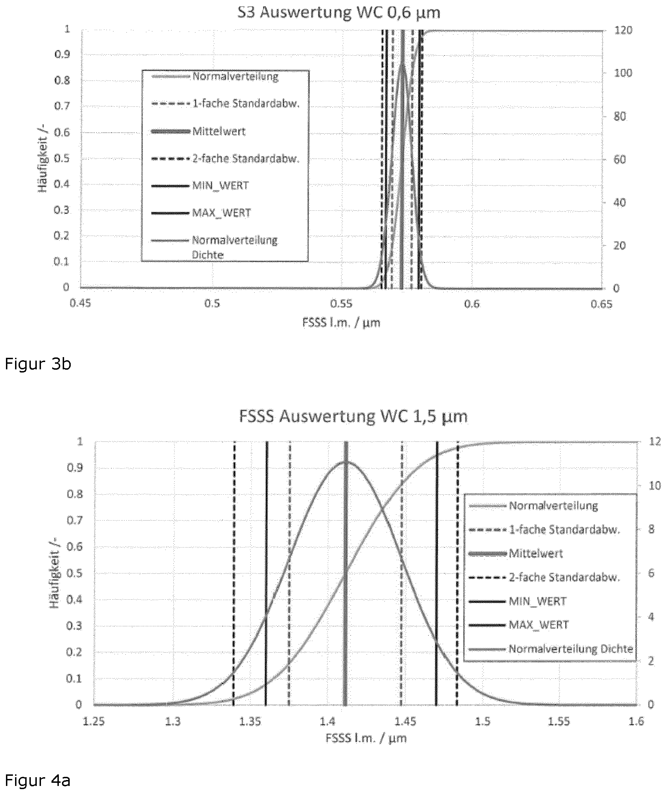

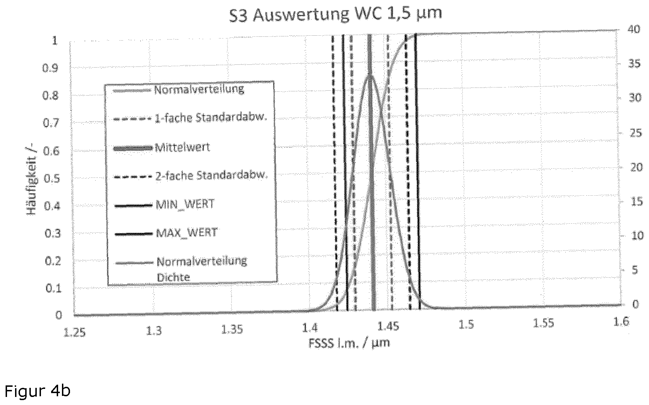

Die Figuren 3 und 4 zeigen jeweils einen Vergleich der Messstreuung in Form einer Gaußschen Normalverteilung zwischen dem herkömmlichen FSSS-Verfahren und dem erfindungsgemäßen Verfahren.

Zur Überprüfung der Genauigkeit wurde eine Probe mit einer bekannten Korngröße mehrfach mit einer statistisch signifikanten Anzahl an Messungen mittels FSSS-Verfahren und mittels des erfindungsgemäßen Verfahrens vermessen. In einer ersten Messung wurde Wolframcarbid-Pulver mit einer Korngröße von 0,6 $\mu$m gewählt. Der Vergleich der beiden Verfahren zeigt eine deutlich breitere Streuung der Messwerte bei der Bestimmung gemäß dem FSSS-Verfahren (Figur 3a). Im Gegensatz dazu lieferte eine Vermessung der selben Pulvercharge gemäß dem erfindungsgemäßen Verfahren eine deutlich engere Verteilung der Messwerte (Figur 3b), was die höhere Präzision des erfindungsgemäßen Verfahrens belegt.

Das gleiche wurde bei Vermessung eines Wolframcarbid-Pulvers mit einer Korngröße von 1,50 $\mu$m beobachtet. Auch hier liefert eine Vermessung der Probe gemäß dem FSSS-Verfahren eine deutliche Streuung der Messwerte (Figur 4a), während mit dem erfindungsgemäßen Verfahren eine engere Verteilung der Messwerte erreicht werden konnte (Figur 4b).

**Patentansprüche**

1.  Verfahren zur Bestimmung des Äquivalentdurchmessers D von Pulverpartikeln, **dadurch gekennzeichnet, dass** der Äquivalentdurchmesser mittels Mehrpunktmessung bestimmt wird.

2.  Verfahren gemäß Anspruch 1, **dadurch gekennzeichnet, dass** das Verfahren die folgenden Schritte umfasst:

    i) Bereitstellen einer Pulverprobe in Form eines Pulverpresslings;
    ii) Bestimmen der Porosität des Pulverpresslings auf Basis der Masse und der Höhe des Pulverpresslings;
    iii) Ermitteln des Verhältnisses von $\Delta$p und Q durch Durchströmen des Pulverpresslings mit einem Messfluid durch Variation von $\Delta$p oder Q über die Zeit unter Erhalt einer Kennlinie,
    wobei $\Delta$p die in Strömungsrichtung auftretende Differenz zwischen dem Druck $p_{vor}$ vor dem Pulverpressling und dem Druck $p_{nach}$ nach dem Pulverpressling angibt;
    wobei Q den Volumenstrom des Messfluids bezeichnet; und
    iv) Ermitteln des Äquivalentdurchmessers D durch Ableitung aus der Kennlinie unter Berücksichtigung der in ii) ermittelten Porosität des Pulverpresslings.

3.  Verfahren gemäß wenigstens einem der vorangehenden Ansprüche, **dadurch gekennzeichnet**, die in Schritt iii) und/oder iv) mindestens zwei unterschiedlichen Messpunkte erhalten werden, die nicht dem Nullpunkt ($\Delta$p= 0; bzw. Q = 0) der Kennlinie entsprechen.

4.  Verfahren gemäß wenigstens einem der vorangehenden Ansprüche, **dadurch gekennzeichnet, dass** die Kennlinie des Zusammenhangs zwischen $\Delta$p und Q durch gezielte Variation des Volumenstroms Q(t) oder durch gezielte Variation des Druckes $p_{vor}$(t) ermittelt wird.

5.  Verfahren gemäß wenigstens einem der Ansprüche 1 bis 3, **dadurch gekennzeichnet, dass** die Kennlinie des Zusammenhangs zwischen $\Delta$p und Q als zeitlicher Verlauf des Drucks $p_{vor}$(t) vor dem Pulverpressling ermittelt wird.

6.  Verfahren gemäß wenigstens einem der vorangehenden Ansprüche, **dadurch gekennzeichnet, dass** die Kennlinie des Zusammenhangs zwischen $\Delta$p und Q als zeitlicher Verlauf des Drucks $p_{vor}$(t) vor dem Pulverpressling bei kontinuierlich steigendem Volumenstrom Q(t) erhalten wird.

7.  Verfahren gemäß wenigstens einem der vorangehenden Ansprüche, **dadurch gekennzeichnet, dass** der Pulverpressling durch Verpressen einer zu vermessenden Pulverprobe mit einer definierten Kraft erhalten wird.

8.  Verfahren gemäß Anspruch 7, **dadurch gekennzeichnet, dass** das Verpressen automatisiert erfolgt.

9.  Apparatur zur Bestimmung des Äquivalentdurchmessers D einer Pulverprobe mittels eines Verfahrens gemäß wenigstens einem der vorangehenden Ansprüche, **dadurch gekennzeichnet, dass** die Apparatur eine Aufnahmevorrichtung zur Aufnahme eines Proberöhrchens mit dem zu messenden Pulverpresslings, eine Datenaufnahmevorrichtung zur Aufnahme der Daten $p_{vor}$ und $p_{nach}$, oder $\Delta$p, und Q, eine Datenauswerteeinheit, eine Datenausgabevorrichtung, einen Druckregulator, eine Einlassvorrichtung und eine Auslassvorrichtung für ein Fluid und einen Regulator zum Regeln des Volumenstroms des Fluids aufweist.

10. Apparatur gemäß Anspruch 9, **dadurch gekennzeichnet, dass** die Apparatur weiterhin eine automatische Pressvorrichtung zur Herstellung eines Pulverpresslings umfasst.

11. Apparatur gemäß wenigstens einem der Ansprüche 9 und 10, **dadurch gekennzeichnet, dass** die Apparatur weiterhin über verschiedene Regulatoren für Druck und Volumenstrom verfügt.

12. Apparatur gemäß wenigstens einem der Ansprüche 9 bis 11, **dadurch gekennzeichnet, dass** die Apparatur über mehrere, parallel geschaltete Messplätze und eine zentrale Steuer- und Auswerteeinheit zur Verwaltung der Messplätze verfügt.

Figur 1

Figur 1a

Figur 2

Figur 3a

S3 Auswertung WC 0,6 µm

Figur 3b

FSSS Auswertung WC 1,5 µm

Figur 4a

S3 Auswertung WC 1,5 µm

Figur 4b

Europäisches
Patentamt

European
Patent Office

Office européen
des brevets

# EUROPÄISCHER RECHERCHENBERICHT

Nummer der Anmeldung

EP 21 21 4613

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | JUNKAR ET AL: "Pressure drop characteristics of poly(high internal phase emulsion) monoliths", JOURNAL OF CHROMATOGRAPHY A, ELSEVIER, AMSTERDAM, NL, Bd. 1144, Nr. 1, 22. Februar 2007 (2007-02-22), Seiten 48-54, XP005900449, ISSN: 0021-9673, DOI: 10.1016/J.CHROMA.2007.01.003 * 2. Experimental * * 3. Results and discussion * ----- | 1-12 | INV. G01N15/02 |
| X | JUNG S ET AL: "Packing density, permeability, and separation efficiency of packed microchips at different particle-aspect ratios", JOURNAL OF CHROMATOGRAPHY A, ELSEVIER, AMSTERDAM, NL, Bd. 1216, Nr. 2, 9. Januar 2009 (2009-01-09), Seiten 264-273, XP025817096, ISSN: 0021-9673, DOI: 10.1016/J.CHROMA.2008.11.073 [gefunden am 2008-12-03] * 3. Theoretical background * * 4.3 Hydraulic permeability * ----- | 1-12 | |
| X | GB 2 025 069 A (MICROSCAL LTD) 16. Januar 1980 (1980-01-16) | 9-12 | RECHERCHIERTE SACHGEBIETE (IPC) G01N |
| A | * Seite 1, Zeile 4 – Zeile 43 * * Seite 3, Zeile 35 – Zeile 38 * * Abbildung 2 * ----- | 1-8 | |
| X | JP 3 125263 B2 (TAIYO YUDEN KK) 15. Januar 2001 (2001-01-15) | 1-8 | |
| A | * Absatz [0009] – Absatz [0013] * * Abbildung 6 * ----- -/-- | 9-12 | |

Der vorliegende Recherchenbericht wurde für alle Patentansprüche erstellt

| Recherchenort | Abschlußdatum der Recherche | Prüfer |
|---|---|---|
| Den Haag | 18. Mai 2022 | Liefrink, Feike |

EPO FORM 1503 03.82 (P04C03)

Europäisches
Patentamt

European
Patent Office

Office européen
des brevets

# EUROPÄISCHER RECHERCHENBERICHT

Nummer der Anmeldung

**EP 21 21 4613**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | JP S50 33678 B1 (UNKNOWN) 1. November 1975 (1975-11-01) | 1-8 | |
| A | * Absatz [0003] * ----- | 9-12 | |
| A | TERENCE ALLEN ED – TERENCE ALLEN: "Chapter 1: Permeametry and gas diffusion", 1. Januar 1997 (1997-01-01), PARTICLE SIZE MEASUREMENT – VOL. 2: SURFACE AREA AND PORE SIZE DETERMINATION, CHAPMAN & HALL, GB, PAGE(S) 1 – 38, XP008174534, ISBN: 978-0-412-75330-5 * das ganze Dokument * ----- | 1-12 | |

RECHERCHIERTE
SACHGEBIETE (IPC)

Der vorliegende Recherchenbericht wurde für alle Patentansprüche erstellt

| Recherchenort | Abschlußdatum der Recherche | Prüfer |
|---|---|---|
| Den Haag | 18. Mai 2022 | Liefrink, Feike |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 21 21 4613

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

18-05-2022

| Im Recherchenbericht angeführtes Patentdokument | Datum der Veröffentlichung | Mitglied(er) der Patentfamilie | Datum der Veröffentlichung |
|---|---|---|---|
| GB 2025069 A | 16-01-1980 | KEINE | |
| JP 3125263 B2 | 15-01-2001 | JP 3125263 B2 | 15-01-2001 |
| | | JP H09132458 A | 20-05-1997 |
| JP S5033678 B1 | 01-11-1975 | KEINE | |

EPO FORM P0461

Für nähere Einzelheiten zu diesem Anhang : siehe Amtsblatt des Europäischen Patentamts, Nr.12/82